# FASCICULE DE BREVET EUROPEEN

(11) **EP 2 817 870 B1**
(45) Date de publication et mention de la délivrance du brevet: **12.04.2017**
(21) Numéro de dépôt: 13706209.7
(22) Date de dépôt: 15.02.2013
(51) Int. Cl.: H02K 44/08, B64G 1/28, H02K 44/16, B64G 1/32, G01C 19/12, G01C 19/14

(54) **ACTIONNEUR INERTIEL MAGNETOHYDRODYNAMIQUE**
MAGNETOHYDRODYNAMISCHES INERTES STELLGLIED
MAGNETOHYDRODYNAMIC INERTIAL ACTUATOR

(30) Priorité: 21.02.2012 FR 1251576
(43) Date de publication de la demande: 31.12.2014
(73) Titulaire: Centre National d'Etudes Spatiales, 75001 Paris (FR); Institut National Polytechnique de Toulouse, 31209 Toulouse Cedex 4 (FR); Centre National de la Recherche Scientifique (C.N.R.S.), 75016 Paris (FR)
(72) Inventeur: CASTERAS, Christophe, F-31400 Toulouse (FR); LEFEVRE, Yvan, F-31240 Saint-jean (FR); HARRIBEY, Dominique, F-31120 Portet Sur Garonne (FR)
(74) Mandataire: Lavoix
(86) Numéro de dépôt international: PCT/EP2013/053101
(87) Numéro de publication internationale: WO 2013/124225

(56) Documents cités:
- EP-A2- 1 770 404
- EP-A2- 1 770 404
- DE-A1-102008 022 725
- DE-A1-102008 022 725
- JP-A- 4 055 198
- JP-A- 4 055 198
- US-A- 2 856 142
- US-A- 2 856 142

## Description

La présente invention concerne un actionneur inertiel magnétohydrodynamique destiné à être utilisé notamment en tant qu'élément actionneur de précision d'un sous-Système de Contrôle d'Attitude et d'Orbite de satellite, et de manière générale une plateforme stabilisée dans laquelle est embarqué au moins un tel actionneur inertiel.

Il est connu d'utiliser des roues cinétiques ou de réaction dans un Sous-système de Contrôle d'Attitude et d'Orbite de précision pour des engins ou véhicules spatiaux dont la taille peut aller de celle d'une station spatiale à celle d'un nanosatellite, pour des missions exigeant un pointage précis de la plateforme.

Classiquement, les roues d'un Sous-système de Contrôle d'Attitude et d'Orbite sont utilisées en tant qu'actionneurs inertiels pour modifier le moment angulaire/ moment cinétique d'un engin spatial afin d'en corriger l'attitude ou le pointage ou pour conférer à l'engin spatial une certaine rigidité gyroscopique, et sont réalisées chacune par un volant d'inertie rigide et solide, monté sur un palier à roulements ou un palier magnétique, et entraîné par un moteur électrique.

Cependant les roues à inertie à palier à roulements restent à durée de vie limitée. Leur comportement autour de la vitesse nulle pose également des problèmes sur un nombre important de missions spatiales qui requièrent des pointages très précis (observations par des satellites depuis l'orbite géostationnaire, par exemple un satellite Meteosat troisième génération, dénommé en anglais MTG pour Meteosat Third Generation). En effet, outre les problèmes tribologiques de réalimentation du contact bille/piste au sein des roulements, le couple de réaction exportée est non linéaire avec un petit saut de couple au passage de la vitesse nulle dû au couple de stiction du palier de guidage. Par ailleurs, la vitesse de rotation de la roue est moins bien contrôlée dans cette zone de fonctionnement.

Les roues à palier magnétique, quant à elles, nécessitent un asservissement complexe du guidage suivant les axes actifs du palier. Le réglage de l'asservissement doit notamment prendre en compte les modes propres de la roue et du support. De plus, un système de « gerbage » ou de blocage doit être envisagé pour maintenir le rotor durant les vibrations de transport ou de lancement de l'engin spatial.

Pour palier ces inconvénients, des roues magnétohydrodynamiques, fondées sur la mise en rotation d'une masse liquide dans une boucle fluidique par une pompe magnétohydrodynamique ou électromagnétiques ont été proposées comme décrites dans les demandes de brevet US 3 133 213, US 2 856142, JP 4 055 198 A, DE 10 2008 022 725 A1 et EP 1 770 404 A2.

De cette manière, la roue cinétique ou de réaction classique, rigide encombrante, et possédant des pièces d'usure, est remplacée par une roue cinétique ou de réaction fluide de durée de vie quasiment illimitée.

Le document US 3,133,213, publié le 12 mai 1964 décrit une structure magnétique, commune à trois roues magnétohydrodynamiques, et de production d'un flux magnétique au niveau de trois entrefers. Chaque entrefer est associé respectivement à une paire unique et différente de pôles magnétiques d'une pompe magnétohydrodynamique linéaire à conduction continue différente. Chaque pompe magnétohydrodynamique, associée respectivement à une boucle fluidique unique et différente, est disposée localement au niveau d'une zone de mise en mouvement de la boucle fluidique associée, la zone de mise en mouvement étant encadrée par l'entrefer correspondant de la structure magnétique. Chaque ensemble, formé par une pompe magnétohydrodynamique, une boucle fluidique, et un entrefer, constitue une roue d'inertie magnétohydrodynamique différente, les axes d'inerties des trois roues d'inertie étant mutuellement orthogonaux.

La provision d'une structure magnétique, mise en commun pour produire le flux magnétique requis par les pompes magnétohydrodynamiques, permet d'économiser de la masse sur le circuit magnétique et de simplifier sa fabrication.

Toutefois, une portion du circuit magnétique traverse les trous centraux des boucles fluidiques, ce qui dégrade l'utilisation de l'espace central des boucles fluidiques pour y installer des équipements utiles comme par exemple des équipements électroniques.

Le document US 2, 856, 142 décrit une structure de contrôle de l'attitude d'un satellite, ayant trois roues magnétohydrodynamiques sensiblement identiques à celles décrites dans le document US 3,133,213 et en différant par l'absence d'un circuit magnétique mutualisé.

Le document US 2, 856,142 résout le problème d'encombrement central des trous des boucles fluidiques en disposant les structures magnétiques de chaque pompe magnétohydrodynamique à la périphérie de chaque boucle fluidique.

Toutefois, la structure de roue proposée dans le document US 2, 856,142, à l'instar de celle décrite dans le document US 3, 133, 213, présente l'inconvénient d'être sensible en termes de réponse linéaire aux effets d'un parasitage local du mouvement du fluide, lié par exemple à un défaut de la pompe, un défaut local de surface de l'anneau fluidique, à une certaine compressibilité du fluide inertiel ou un défaut local d'homogénéité du liquide conducteur,

Le problème technique est de diminuer la sensibilité de la roue magnétohydrodynamique à de tels effets en tant qu'actionneur inertiel.

A cet effet l'invention a pour objet un actionneur inertiel de stabilisation et/ou de pointage d'une plateforme et une plateforme selon les revendications.

L'invention sera mieux comprise et d'autres avantages de celle-ci apparaîtront plus clairement à la lecture de la description qui va suivre de plusieurs formes de réalisation de l'invention, donnée uniquement à titre d'exemple et faite en se référant aux dessins annexés dans lesquels :
- la Figure 1 est une vue de dessus d'une première forme de réalisation d'une roue magnétohydrodynamique d'actionnement inertiel selon l'invention ;
- la Figure 2 est une vue en coupe d'une pompe magnétohydrodynamique de la roue magnétohydrodynamique de la Figure 1 coupée selon le plan de coupe II-II ;
- la Figure 3 est une vue partielle d'une deuxième forme de réalisation d'une roue magnétohydrodynamique d'actionnement inertiel selon l'invention ;
- la Figure 4 est une vue externe générale d'une troisième forme de réalisation d'une roue magnétohydrodynamique d'actionnement inertiel selon l'invention ;
- la Figure 5 est une vue en perspective d'une moitié de la roue magnétohydrodynamique d'actionnement inertiel de la Figure 4, coupée en deux selon le plan de coupe V-V ;
- la Figure 6 est une vue en coupe de la roue magnétohydrodynamique d'actionnement inertiel de la Figure 4 coupée suivant le plan de coupe V-V ;
- la Figure 7 est une vue en coupe de la roue d'inertie de la roue magnétohydrodynamique d'actionnement inertiel de la Figure 4 coupée selon le plan de coupe VII-VII ;
- la Figure 8 est une vue en perspective des éléments de conduction des champs magnétiques, formant partiellement le stator de la pompe magnétohydrodynamique de la roue des Figures 4 à 7 ;
- la Figure 9 est une vue d'un satellite dont la plateforme intègre trois roues magnétohydrodynamiques d'actionnement inertiel du type décrit dans l'une quelconque des Figures 1 à 8.

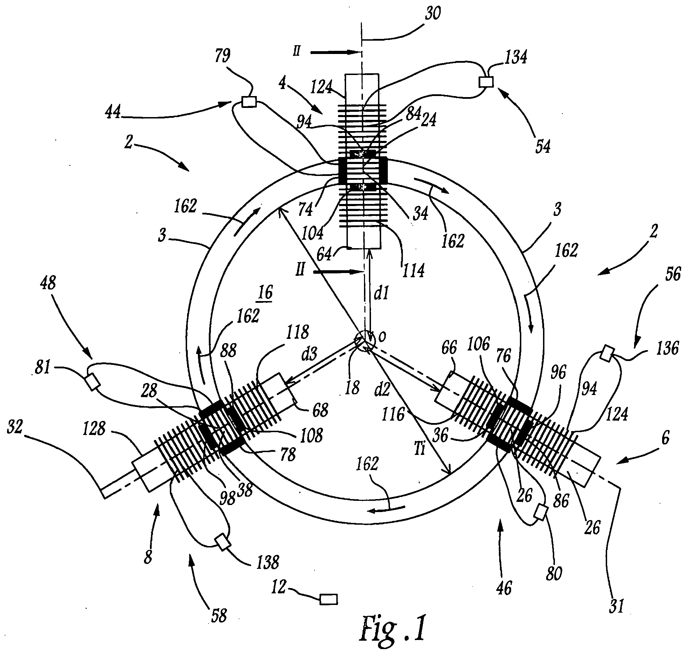

Suivant la Figure 1 et une première forme de réalisation d'un actionneur inertiel, une roue magnétohydrodynamique 2 d'actionnement inertiel, pour modifier le moment angulaire/ moment cinétique d'une plateforme afin d'en corriger l'attitude ou le pointage ou pour conférer à la plateforme une certaine rigidité gyroscopique, comprend un anneau fluidique 3, trois pompes magnétohydrodynamiques différentes 4, 6, 8 et un circuit de synchronisation et régulation 12.

L'anneau fluidique 3 a la forme d'un tore creux, et comporte un trou d'anneau central 16 traversé par un axe central 18, la section transversale interne du tore creux formant l'anneau fluidique 3, selon un demi-plan radial quelconque ayant pour frontière l'axe central 18, étant rectangulaire.

L'axe central 18 traverse perpendiculairement le plan de la Figure 1 en O.

L'anneau fluidique 3 a une taille interne radiale Ti égale au diamètre du trou central 16.

L'anneau fluidique 3 est rempli totalement par un liquide conducteur à densité élevée, par exemple un métal liquide comme du gallium liquide, et comprend au moins une zone effective de mise en mouvement du liquide conducteur, ici trois zones effectives distinctes, désignées respectivement par les références 24, 26, 28.

Les trois zones effectives 24, 26, 28 de mise en mouvement sont séparées entres elles et sans recouvrement, et sont centrées chacune autour d'un demi-plan médian radial respectif 30, 31, 32, deux demi-plans médians radiaux consécutifs quelconques étant espacés angulairement de 120 degrés.

Chaque zone effective 24, 26, 28 est ici associée à une zone d'entrefer unique et différente 34, 36, 38 de l'anneau fluidique 3 et chaque zone entrefer 34, 36, 38 est apte à être traversé par un champ magnétique différent.

Les pompes magnétohydrodynamiques 4, 6, 8 sont disposées autour de l'axe central 18 de l'anneau fluidique 3, et chaque pompe magnétohydrodynamique 4, 6, 8 est respectivement associée à une unique zone d'entrefer, et ici de manière particulière à une unique zone effective différente 24, 26, 28 de mise en mouvement du liquide.

Chaque pompe magnétohydrodynamique 4, 6, 8 est ici une pompe du type conduction à courant continu et comporte respectivement un moyen unique et différent de création d'un champ électrique propre de conduction 44, 46, 48, un moyen unique et différent de création d'un champ magnétique propre 54, 56, 58, et un élément unique et différent de conduction magnétique 64, 66, 68.

Chaque moyen de création d'un champ électrique propre de conduction 44, 46, 48 comporte respectivement une paire différente et unique d'électrodes 74, 76, 78, et une source de tension associée différente 79, 80, 81.

Les faces d'une même paire d'électrodes 74, 76, 78 sont disposées de part et d'autre de l'anneau fluidique 3 au dessus et en dessous, le sens allant du dessous vers le dessus étant le même que celui de l'axe central 18, et seules des parties de dessus des électrodes 74, 76, 78 étant visibles sur la Figure 1.

Chaque paire 74, 76, 78 d'électrodes est connectée aux bornes de la source de tension 79, 80, 81 qui lui est associée.

Chaque élément de conduction magnétique 64, 66, 68 comprend respectivement un entrefer 84, 86, 88 associée à une zone d'entrefer unique et différente 34, 36, 38 de l'anneau fluidique 3 sur laquelle est appliqué le champ magnétique correspondant.

Chaque élément de conduction magnétique 64, 66, 68 est configuré pour conduire et canaliser, au travers de l'entrefer associé 84, 86, 88 sur la zone d'entrefer 34, 36, 38 correspondante, le champ magnétique différent, créé par le moyen de création de champ magnétique 54, 56, 58 associé.

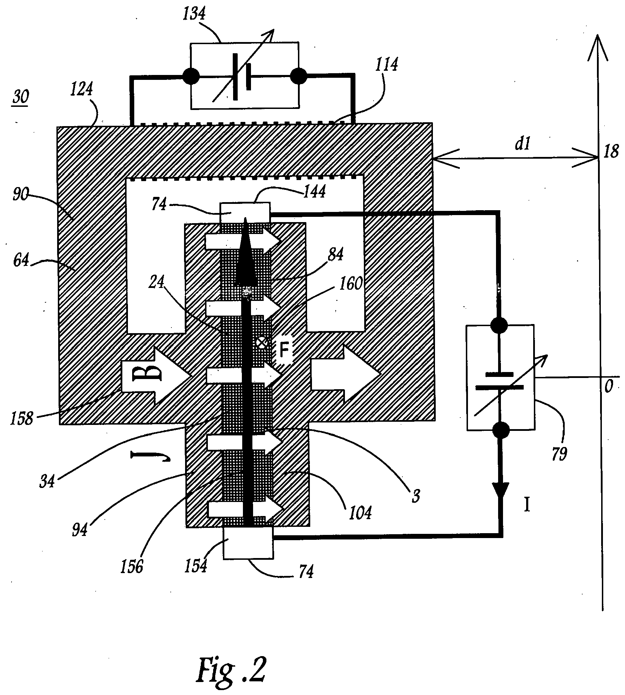

Chaque élément de conduction magnétique 64, 66, 68 est réalisé ici sous la forme d'un feuilletage de tôles magnétiques à grains non orientés, découpées selon un même motif 90 tel que représenté sur la Figure 2. Lors de l'assemblage de la roue, l'axe d'empilement des tôles d'un élément de conduction est aligné sur une direction circonférentielle de l'anneau fluidique 3 par rapport l'axe central 18, c'est à dire une direction polaire sur la Figure 1 par rapport au point central O.

Chaque élément de conduction magnétique 64, 66, 68 comporte respectivement une première extrémité polaire 94, 96, 98 et une deuxième extrémité polaire 104, 106, 108, délimitant respectivement l'entrefer correspondant 84, 86, 88, et disposées radialement de part et d'autre de la zone d'entrefer associée 34, 36, 38 en encadrant cette dernière au plus près pour former avec la zone d'entrefer 34, 36, 38 un circuit magnétique refermé sur lui-même.

Chaque moyen de création d'un champ magnétique propre 54, 56, 58 comprend respectivement une bobine d'induction 114, 116, 118, enroulée autour d'une portion 124, 126, 128 de l'élément de conduction magnétique associé 64, 66, 68.

Chaque bobine d'induction 114, 116, 118 est raccordée aux bornes d'une source de courant 134, 136, 138 associée, unique et différente, faisant partie du moyen de création de champ magnétique 54, 56, 58 associé.

Chaque élément de conduction magnétique 64, 66, 68 est séparé au plus près de l'axe central 18 du trou 16 de l'anneau fluidique 3 par une distance d'éloignement de l'élément de conduction magnétique qui lui est propre, désignée respectivement par d1, d2, et d3.

La roue magnétohydrodynamique 2 d'actionnement inertiel est configurée pour que le rapport de la distance d'éloignement d'un élément de conduction magnétique quelconque 64, 66, 68 d'une quelconque pompe magnétohydrodynamique 4, 6, 8 sur la moitié de la taille radiale interne Ti de l'anneau fluidique 3 est supérieur ou égal à 0,5, et de préférence supérieur ou égal 0,7.

En d'autres termes, tous les rapports 2*d1/Ti, 2*d2/Ti et 2*d3/Ti sont supérieurs ou égaux à 0,5, de préférence supérieurs ou égaux 0,7

Les sources de tensions 79, 80, 81, respectivement les sources de courant 134, 136, 138 sont modulables dans le temps en termes d'amplitudes de tension, respectivement d'intensités de courant, aux travers de signaux de commandes reçus en des bornes de commandes.

Le circuit de synchronisation et de régulation 12 est connecté aux sources de tension 79, 80, 81 et aux sources de courant 134, 136, 138 de l'ensemble des pompes magnétohydrodynamiques 4, 6, 8 au travers de liaisons non représentées sur la Figure 1.

Le circuit de synchronisation et de régulation 12 est configuré pour synchroniser et moduler les intensités des champs magnétiques et les intensités des champs électriques, créés respectivement par les pompes magnétohydrodynamiques 4, 6, 8, de façon à rendre minimale l'énergie électrique consommée par l'ensemble des pompes magnétohydrodynamiques 4, 6, 8 lorsque le fluide conducteur tourne à une vitesse de rotation de consigne prédéterminée.

Les intensités des champs magnétiques et des intensités des champs électriques sont modulées et synchronisées au travers de commandes élaborées par le circuit de synchronisation et de régulation 12 et envoyées aux sources de tensions 79, 80, 81 et aux sources de courant 134, 136, 138 des pompes magnétohydrodynamiques 4, 6, 8.

Le circuit de synchronisation et de régulation 12 est ici disposé à l'extérieur de l'anneau fluidique 3.

En variante de la Figure 1, le circuit de synchronisation et de régulation 12 est disposé à l'intérieur de l'anneau fluidique 3 dans le trou central 16.

En variante de la Figure 1, chaque pompe magnétohydrodynamique comporte respectivement un ensemble différent de deux éléments de conduction magnétique.

Chaque ensemble d'éléments de conduction magnétique, associé à une pompe magnétohydrodynamique, comporte dans ce cas un premier élément de conduction magnétique et un deuxième élément de conduction magnétique, disposés radialement de part et d'autre de la zone d'entrefer associée, en l'encadrant au plus près pour former en série avec la zone d'entrefer et le moyen de création de champ magnétique un circuit magnétique refermé sur lui-même.

Chaque moyen de création d'un champ magnétique comprend respectivement, un aimant permanent disposé entre le premier élément de conduction magnétique, et le deuxième élément de conduction magnétique de l'ensemble associé d'éléments de conduction magnétique.

Suivant la Figure 2, le mécanisme de mise en mouvement du liquide conducteur par la pompe magnétohydrodynamique 4 de la Figure 1 est représenté.

Les éléments de la pompe 4 représentés sur la Figure 1 et sur la Figure 2 sont désignés par les mêmes références numériques.

Lorsqu'une première tension V1 est appliquée à une première électrode 144 de la paire 74 et une deuxième tension V2 est appliquée à une deuxième électrode 154, la première tension V1 étant inférieure à la deuxième tension V2, un champ électrique E est créé, orienté dans un sens allant depuis la première électrode 144 vers la deuxième électrode 154, et un courant électrique J est créé dans le fluide métallique qui s'écoule depuis la deuxième électrode 154 vers la première électrode 144 suivant une première flèche 156.

En même temps, lorsqu'un courant est créé dans la bobine d'induction 114 par le générateur de courant 134, un champ magnétique B est créé dans l'élément de conduction magnétique 64 qui canalise le champ magnétique B et le focalise au travers de l'entrefer 84 sur la zone d'entrefer 34. Ainsi un circuit magnétique efficace est réalisé.

Ici sur la Figure 2 et à titre d'exemple le sens du courant dans la bobine d'excitation 114 est choisi de sorte à créer un champ magnétique B orienté dans un sens, allant depuis la première extrémité polaire 94 vers la deuxième extrémité polaire 104 et représenté par une deuxième flèche 158.

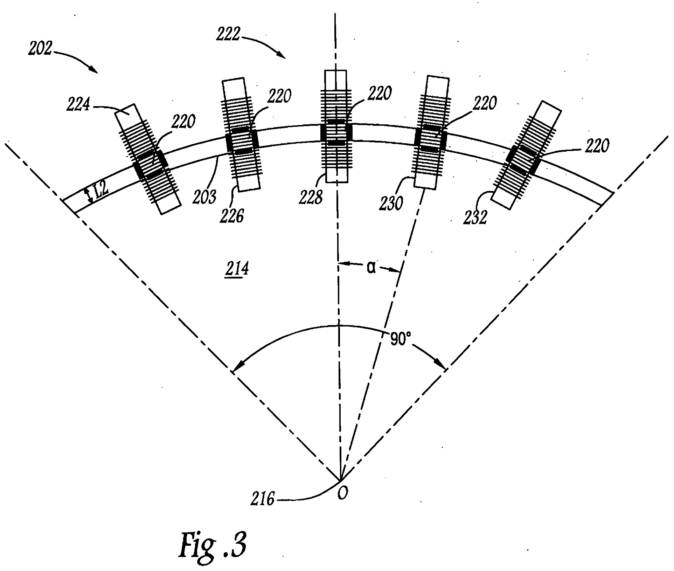

En conséquence, une force de Lorentz F est créée et appliquée à la portion de liquide conducteur contenue dans la zone effective de mise en mouvement 24, le sens de la Force de Lorentz F étant dirigé selon un axe perpendiculaire à la direction du champ magnétique B et à la direction du courant électrique J, étant orienté dans le sens de visionnage de la Figure 3 et représenté par une flèche 160 de vecteur F, vu de bout sur la Figure 2 en fuyant vers l'arrière.

Du fait d'une forte incompressibilité supposée du liquide conducteur, la force de Lorentz F est appliquée à l'ensemble du liquide, ce qui va se traduire par une modification de sa quantité de mouvement proportionnelle à la durée d'application de la force de Lorentz.

Si le liquide conducteur est initialement au repos, cela se traduit par une mise en mouvement du liquide dans le même sens que la Force de Lorentz, ce qui correspond à une mise en rotation dans un sens horaire sur la Figure 1 représenté par une série de flèches 162.

Si le liquide est animé d'une vitesse initiale, cela se traduit par une modification de la vitesse initiale en une nouvelle vitesse, la différence entre la nouvelle vitesse et la vitesse initiale étant égale au produit orienté de la force de Lorentz par la durée d'application de la force.

Dans le cas où, soit la polarité de la source de tension 134 des électrodes 74, soit le sens du courant dans la bobine d'induction 114, est inversé, le sens de la force de Lorentz est modifié.

La source de tension 79, 80, 81 et/ou la source de courant 134, 136, 138 des pompes magnétohydrodynamiques 4, 6, 8 étant configurées pour fournir des tensions, respectivement des courants dont les amplitudes sont modifiables au travers de commandes, par l'ajout à la roue magnétohydrodynamique d'inertie 2 d'un capteur représentatif de la vitesse de rotation du fluide conducteur, il est possible de modifier la vitesse de l'anneau fluidique 3 et de fournir un moment dynamique de correction à une plateforme supportant la roue d'inertie.

Suivant la Figure 3 et une deuxième forme de réalisation d'actionneur inertiel, une roue magnétohydrodynamique 202 d'actionnement inertiel comprend un anneau fluidique 203 ayant un trou central 214 traversé par un axe central 216, et un nombre entier élevé P, ici égal 20, de zones effectives distinctes 220 de mise en mouvement d'un liquide conducteur remplissant l'anneau fluidique 203.

A l'instar de l'anneau fluidique 3 de la Figure 1, l'anneau fluidique 203 a la forme d'un tore et une section transversale génératrice du tore de forme rectangulaire, la longueur L1 du rectangle de la section transversale du tore étant étendue selon la même direction que l'axe central 216 et ayant une dimension supérieure à celle de la largeur radiale L2 du même rectangle.

Les zones effectives distinctes 220 de mise en mouvement sont centrées chacune autour d'un demi plan médian radial respectif, et espacées angulairement autour de l'axe central 216 suivant un pas α d'espacement régulier, sensiblement égal à 360 degrés divisés par le nombre P de zone effectives, c'est à dire égal ici à 18 degrés.

La roue magnétohydrodynamique 202 comprend un nombre P identique de pompes magnétohydrodynamiques espacées régulièrement et angulairement selon le pas angulaire α.

Sur la Figure 3, seul un ensemble 222 de cinq pompes 224, 226, 228, 230, 232 voisines est représenté couvrant un angle au centre de l'anneau fluidique égal ici à 90 degrés. Trois autres ensembles de pompes, similaires à l'ensemble 222 viennent compléter les trois autres quadrants non représentés de l'anneau fluidique 203.

Chaque pompe magnétohydrodynamique de la roue d'inertie, en particulier chaque pompe prise parmi les première, deuxième, troisième, quatrième, cinquième pompes 224, 226, 228, 230, 232, a la même structure que la pompe magnétohydrodynamique 4 décrite aux Figures 1 et 2, c'est-à-dire est une pompe linéaire à conduction à courant continu.

Chaque pompe magnétohydrodynamique comporte ici une source de tension, propre, unique et différente, d'alimentation en tension différentielle d'une paire d'électrodes associée, et une source de courant, propre, unique et différente, d'alimentation en courant d'une bobine associée.

L'intérêt d'une telle structure à l'instar de la Figure 1 est de fournir de la redondance au niveau des pompes magnétohydrodynamiques, ce qui va dans le sens d'une amélioration de la fiabilité et de la sûreté de la roue d'inertie.

Lorsque le nombre des pompes magnétohydrodynamiques augmente, l'étendue de la plage de correction dynamique de la roue d'inertie augmente, et les effets d'un parasitage local du mouvement du fluide, lié par exemple à un défaut d'une pompe, un défaut local de surface de l'anneau fluidique, une certaine compressibilité ou un défaut local d'homogénéité du liquide conducteur, diminuent par un effet de lissage.

En variante de la Figure 3, une source de tension et/ou une source de courant sont mutualisées sur un groupe de pompes magnétohydrodynamiques.

Par exemple, un premier groupe de pompes, contenant toutes les pompes séparées régulièrement entre elles d'un angle de 90 degrés et en particulier la première pompe 224, est alimenté par une première source de tension et une première source de courant, mises en commun pour l'ensemble des pompes du premier groupe.

Un deuxième groupe, un troisième groupe, un quatrième groupe, et un cinquième groupes distincts de pompes magnétohydrodynamique sont définis de la même manière que le premier groupe et comprennent respectivement la deuxième pompe 226, la troisième pompe 228, la quatrième pompe 230, et la cinquième pompe 232.

Le deuxième groupe, le troisième groupe, le quatrième groupe, et le cinquième groupe sont respectivement alimentés par une deuxième source de tension et une deuxième source de courant, une troisième source de tension et une troisième source de courant, une quatrième source de tension et une quatrième source de courant, une cinquième source de tension et une cinquième source de courant.

Cette variante permet d'économiser de la masse sur les alimentations électriques des pompes magnétohydrodynamiques par rapport à la structure décrite dans la Figure 3.

En variante, chaque pompe magnétohydrodynamique est remplacée par une pompe magnétohydrodynamique prise dans l'ensemble formé par les pompes électromagnétiques à conduction à courant alternatif, les pompes électromagnétiques à induction linéaire, les pompes électromagnétiques à induction annulaire, et les pompes électromagnétiques à induction spirale ou à induction tournante torsadée.

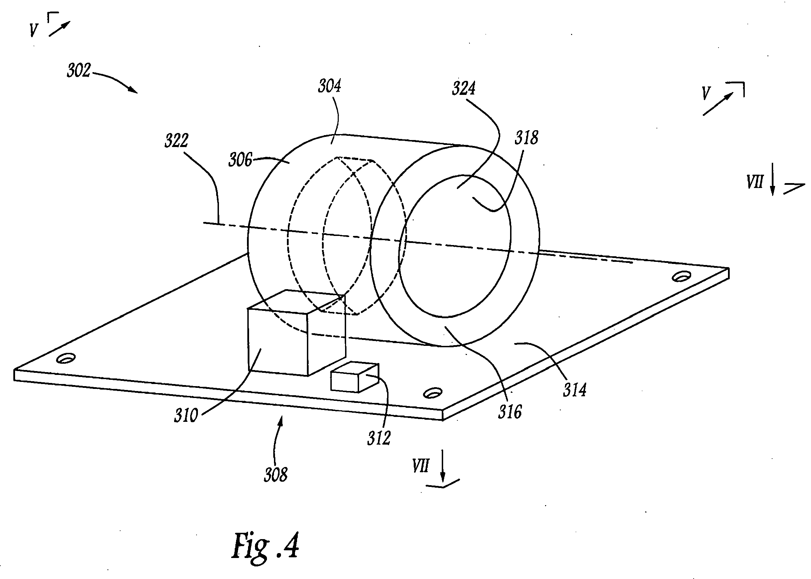

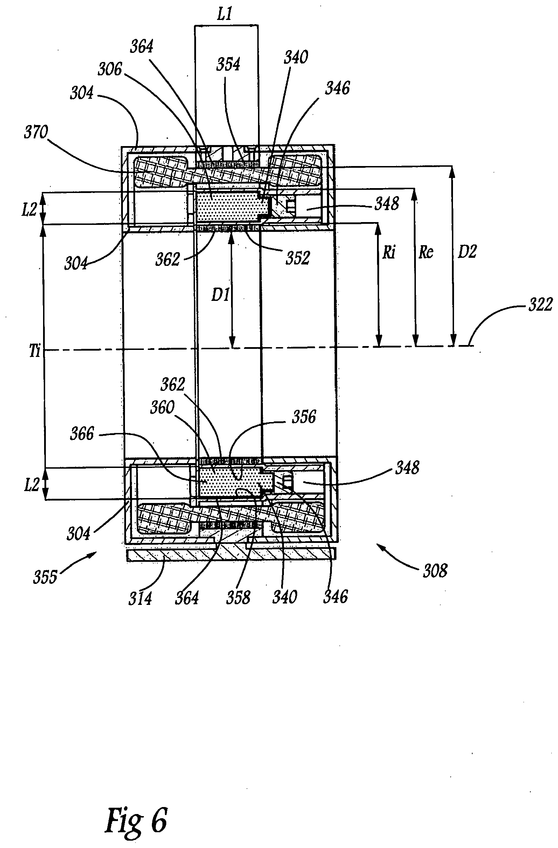

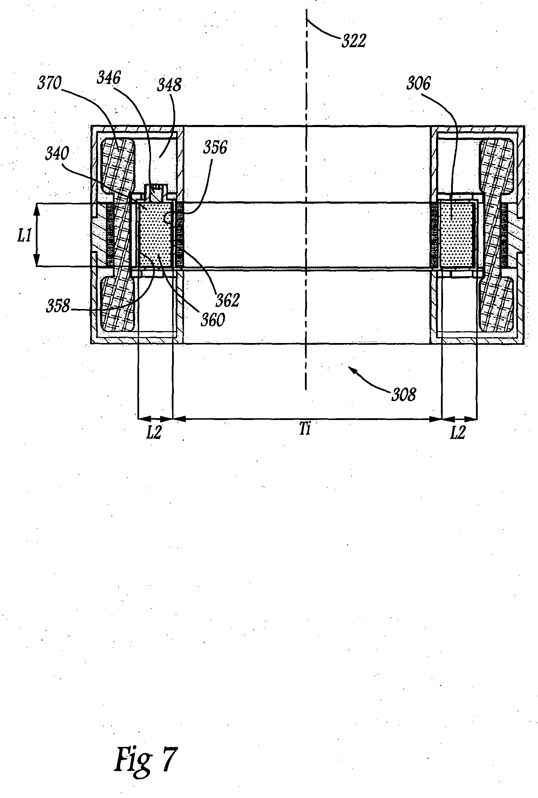

Suivant les Figure 4 à 7 et une troisième forme de réalisation d'actionneur inertiel, une roue magnétohydrodynamique 302 d'actionnement inertiel, comprend une structure de support ou carter 304, un anneau fluidique 306, une unique pompe magnétohydrodynamique 308 comportant une alimentation électrique 310, et une unité de régulation 312 de la fréquence et des intensités de courants de phase.

Suivant la Figure 4, le carter 304 comprend une plaque de montage 314 de la roue magnétohydrodynamique 302 sur une face de plateforme non représentée, et un coffret externe 316 qui abrite l'anneau fluidique 306, représenté en traits interrompus, et la pompe magnétohydrodynamique 308 dans sa totalité hormis l'alimentation électrique 310.

L'alimentation électrique 310 et l'unité de régulation 312 sont fixées sur des surfaces de réception de la plaque de montage 314.

Lorsqu'il est assemblé à la pompe magnétohydrodynamique 308 et à l'anneau fluidique 306 représenté en traits interrompus, le coffret externe 316 métallique a la forme globale d'un premier tore de section génératrice rectangulaire.

Le premier tore est de symétrie cylindrique autour d'un axe central 322 et présente un premier trou central 324.

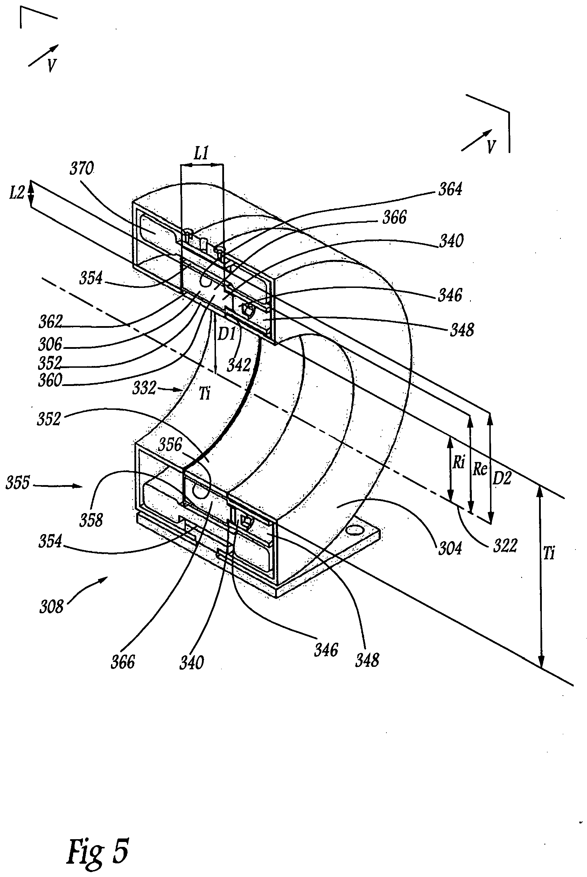

Suivant les Figures 5 à 7, l'anneau fluidique 306 a la forme d'un deuxième tore creux, et comporte un deuxième trou central ou trou d'anneau 332, traversé par le même axe central 322 que celui du premier tore, la section transversale interne du deuxième tore creux formant l'anneau fluidique 306, selon un demi-plan radial quelconque ayant pour frontière l'axe central 322, étant rectangulaire.

A l'instar des anneaux fluidiques 3 et 203 des premier et deuxième modes de réalisation, le rectangle formant la section transversale de l'anneau fluidique 306 est étendu en longueur suivant la direction de l'axe central 322 et en largeur suivant une direction radiale par rapport à l'axe central 322.

La longueur du rectangle désignée par L1, est supérieure à la largeur radiale, désignée par L2.

A l'instar des anneaux fluidiques 3 et 203 des premier et deuxième mode de réalisation, l'anneau fluidique 306 a une taille interne radiale notée Ti égale au diamètre du deuxième trou central 332, et l'anneau fluidique 306 est rempli totalement par un liquide conducteur à densité élevée.

Des orifices de remplissage 340 en liquide sont aménagés sur au moins une face de l'anneau fluidique 306, par exemple la face 342 ayant pour normale un axe parallèle à l'axe central 322.

Des couvercles 346 de fermeture étanche des orifices de remplissage 340 sont prévus dans la roue d'inertie 302.

En outre des conduits d'amenée 348 du liquide conducteur sont aménagés pour être logés à l'intérieur du carter 304 avant la fermeture de ce dernier.

A titre d'exemple, l'anneau fluidique 306 est rempli à l'instar des premier et deuxième modes de réalisation de gallium liquide, la température de fonctionnement de la roue magnétohydrodynamique étant prévue être comprise dans la plage correspondant à l'état liquide, c'est-à-dire entre 30°C et 200°C sous une pression réduite, la température haute de 200°C correspondant ici à la température maximale supportée par les parois de l'anneau fluidique 306.

Suivant les Figures 5 à 8, l'unique pompe 308 est une pompe magnétohydrodynamique à induction annulaire qui comprend un premier élément de conduction magnétique interne 352, un deuxième élément de conduction magnétique externe 354, et un moyen de création 355 d'au moins deux champs magnétiques.

Le premier élément de conduction magnétique interne 352 possède une forme globale annulaire lisse et est réalisé par un premier empilement de tôles magnétiques à grains non orientés.

Le deuxième élément de conduction magnétique externe 354 possède une forme globale annulaire et est réalisé par un deuxième empilement de tôles magnétiques à grains non orientés.

Les premier et deuxième éléments de conduction magnétique 352, 354 sont disposés de manière concentrique autour de l'axe central 322, l'axe d'empilement des tôles magnétiques des premier et deuxième éléments magnétiques 352, 354 coïncidant avec l'axe central 322.

Chaque élément de conduction magnétique 352, 354 est séparé au plus près de l'axe central 322 du trou 332 de l'anneau fluidique 306 par une distance d'éloignement de l'élément de conduction magnétique qui lui est propre, désignée respectivement par D1, D2.

La roue magnétohydrodynamique 302 est configurée pour que le rapport de la distance d'éloignement d'un élément de conduction magnétique quelconque pris parmi le premier élément de conduction magnétique 352 et le deuxième élément de conduction magnétique 354 de l'unique pompe magnétohydrodynamique 308 sur la moitié de la taille radiale interne Ti de l'anneau fluidique 306 est supérieur ou égal à 0,5, et de préférence supérieur ou égal 0,7.

Les premier et deuxième éléments de conduction magnétique 352, 354 encadrent de manière circonférentielle au plus près l'anneau fluidique 306, respectivement par une première face d'entrefer interne 356 et par une deuxième face d'entrefer externe 358, la première face interne d'entrefer 356 et la deuxième face externe d'entrefer 358 formant un unique entrefer 360 magnétique pour la pompe 308.

La première face d'entrefer interne 356 du premier élément de conduction magnétique 352 est disposée radialement en vis à vis d'une première face 362 de l'anneau fluidique 306, correspondant à un rayon interne Ri de l'anneau fluidique 306.

La deuxième face d'entrefer externe 358 du deuxième élément de conduction magnétique 354 est disposée radialement en vis-à-vis d'une deuxième face 364 de l'anneau fluidique 306, correspondant à un rayon externe Re de l'anneau 306.

Les première et deuxième faces radiales 362, 364 de l'anneau fluidique 306 délimitent une zone d'entrefer 366 de l'anneau fluidique 306.

Le moyen de création 355 d'un champ magnétique ayant au moins une paire de pôles comprend des enroulements de conducteurs électriques, ici en cuivre et représentés globalement par la référence 370 sur les Figures 5 à 7, et la source d'alimentation en courants 310 seulement représentée sur la Figure 4.

Les enroulements de conducteurs isolés 370 sont répartis tout autour du deuxième élément de conduction magnétique 354 de la même manière que pour un stator externe d'une machine électromécanique à rotation asynchrone classique.

Les premier et deuxième éléments de conduction magnétique 352, 354, et les enroulements de conducteur 370 forment un stator 372 de machine tournante asynchrone, l'anneau fluide de l'anneau fluidique 306, libre de se mouvoir autour de l'axe central 322, constituant le rotor de la machine asynchrone, de la même manière qu'une cage d'écureuil classique.

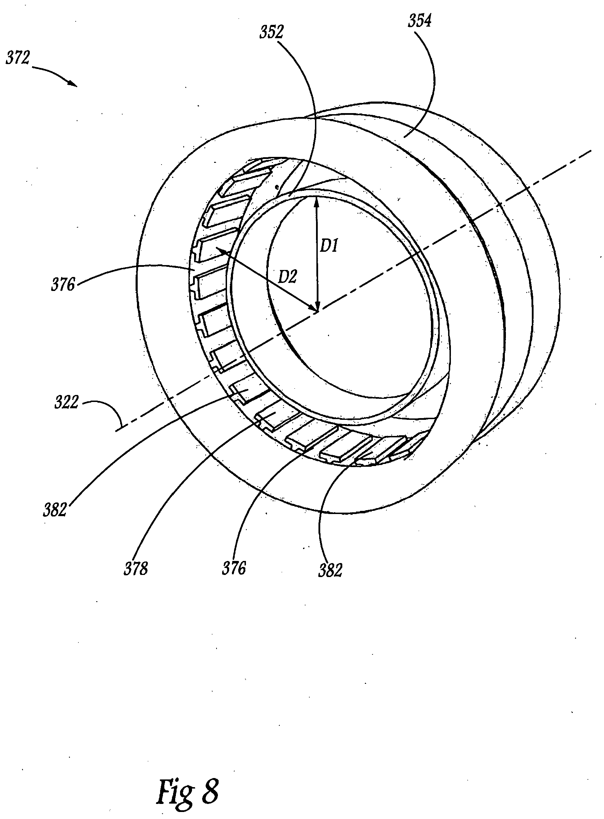

Suivant la figure 8, des encoches statoriques 376 longitudinales sont ménagées radialement et de manière régulière sur une face interne 378 cylindrique du deuxième élément de conduction magnétique 354.

A titre d'exemple du troisième mode de réalisation, les enroulements de conducteurs isolés 370, non représentés, sont placés dans 24 encoches statoriques et distribués en deux groupes identiques de trois bobinages multiples à deux bobines décalées.

En d'autres termes, le stator 372 de la pompe magnétohydrodynamique 308 est formé par une armature triphasée quadripolaire à deux encoches par phase et par pôle.

Les deux groupes réalisent deux paires de pôles du stator.

Un même groupe de trois bobinages est réparti selon la circonférence du deuxième élément de conduction magnétique 354 avec une ouverture angulaire de 180 degrés.

Les trois bobinages d'un même groupe sont décalés deux à deux sur le pourtour du deuxième élément de conduction magnétique 354 d'un angle de 60 degrés, sont distribués électriquement suivant trois phases de courants déphasés temporellement entre eux, et sont connectés à la source d'alimentation en courants 310, au travers de trois bornes de phase correspondantes.

Les phases temporelles des trois courants sont déphasées deux à deux en circulant de 120 degrés et la source d'alimentation en courants est une alimentation triphasée.

La source d'alimentation en courants 310 est une alimentation réalisée à titre d'exemple par l'association d'une batterie et d'un onduleur triphasé à trois phases de sortie.

Deux bobinages voisins ayant une même phase de courant sont espacés angulairement d'un angle égal à 180 degrés.

Chaque bobinage, associé à un même pôle et une même phase de courant, est formé de deux bobines, décalées entre elles d'un angle de 30 degrés sur la circonférence du deuxième élément de conduction magnétique 354. Le bobinage occupe quatre encoches, agencées selon deux paires adjacentes, chaque paire d'encoche étant espacée d'un angle de 60 degrés.

Il est à remarquer que sur la Figure 8 les encoches sont délimitées par des dents 382 découpées dans le deuxième élément de conduction magnétique 354, saillantes et s'évasant vers l'axe central 322, et ayant une forme d'extrémité circonférentielle conjuguée à la portion de la face externe de l'anneau fluidique 306 en vis-à-vis lors de l'assemblage de la roue d'inertie 302. Cela correspond à une structure lisse de stator permettant de réaliser un entrefer sensiblement uniforme avec l'anneau fluidique 306.

A un même instant t de fonctionnement de la pompe magnétohydrodynamique 308, trois familles de champs magnétiques, alternatifs et déphasés d'un angle temporel de 120 degrés, résultant en un champ magnétique quadripolaire tournant à une vitesse de pulsation égale à pulsation temporelle notée ω des courants délivrés par l'alimentation divisée par deux.

Dans cet exemple, la pompe magnétohydrodynamique 308 comprend un unique entrefer 358 et quatre zones effectives de l'anneau fluidique de mise en mouvement du liquide conducteur sont actives en même temps à un même instant t qui correspondent aux positions des quatre pôles du champ magnétique quadripolaire résultant, au même instant t. Ainsi, le nombre de zones effectives de mise en mouvement du liquide conducteur peut-il être considéré être très grand voire infini sur une durée correspondant à un tour du champ magnétique résultant autour de l'anneau fluidique.

A un instant t quelconque de fonctionnement de la roue d'inertie 308, le flux magnétique alternatif développé comme résultant de l'excitation des enroulements conducteurs sélectionne des chemins de flux préférés à faible reluctance incluant le matériau des deux éléments de conduction magnétique 352, 354 et ainsi traverse la zone d'entrefer 358 et les zones effectives à cet instant t de mise en mouvement suivant des directions essentiellement radiales.

Lorsque la roue magnétohydrodynamique 302 fonctionne, l'anneau fluide, c'est-à-dire le liquide conducteur contenu dans l'anneau fluidique est traversé radialement par des flux magnétiques temporellement alternatifs équivalents à un flux magnétique quadripolaire tournant. Des courants de Foucault induits sont créés dans le liquide conducteur sous l'action du flux magnétique appliqué, qui à leur tour créent des champs magnétiques de réaction dont l'interaction avec les champs magnétiques appliqués du stator fournit des couples dynamiques résultants autour de l'axe central 322, c'est-à-dire un moment de correction dynamique ou un moment de réaction.

Un couplage stable est établi pour une vitesse de rotation du liquide conducteur synchrone de la vitesse de rotation du champ magnétique quadripolaire résultant.

Si ω désigne la vitesse de pulsation des courants triphasés, la vitesse de rotation du champ magnétique quadripolaire résultant est égale à ω/2, et la vitesse de rotation du liquide s'exprime sous la forme (1-s) fois ω/2 où s est un nombre réel, inférieur à 1 et appelé glissement.

La source d'alimentation en des courants est modulable dans le temps en termes de la fréquence et des intensités des courants aux travers de signaux de commandes reçus en une ou plusieurs bornes de commandes.

Suivant la Figure 4, le circuit de régulation 312 est connecté à la source d'alimentation en courants 310 au travers d'une ou plusieurs liaisons non représentées.

Le circuit de régulation 312 est configuré pour moduler la fréquence et les intensités des courants de phase traversant les bobinages du stator de façon à rendre minimale l'énergie électrique consommée par l'unique pompe magnétohydrodynamique lorsque le fluide métallique tourne à une vitesse de rotation de consigne prédéterminée.

Le mode de réalisation des Figures 4 à 8 peut être généralisé de la manière suivante.

Les enroulements de conducteurs isolés sont placés dans les encoches statoriques et distribués en un nombre entier p de groupes identiques d'un nombre entier de q bobinages multiples à n bobines décalées.

Le nombre p désigne le nombre de paires de pôles du stator. Le nombre entier q désigne le nombre de phases de courants, et le nombre entier n désigne le nombre d'encoches par phase et par pôle.

Un même groupe de q bobinages est réparti selon la circonférence du premier élément de conduction magnétique avec une ouverture angulaire de 360/p degrés.

Les q bobinages d'un même groupe sont décalés deux à deux d'un angle de 360/p*q degrés.

Les enroulements des conducteurs électriques sont distribués suivant des phases de courants déphasés temporellement entre eux, et sont connectés à la source d'alimentation en courants, au travers des bornes de phase correspondantes.

Les phases temporelles des q courants sont déphases deux à deux en circulant de 360/q degrés et la source d'alimentation en courants est une source d'alimentation en courants polyphasés qui comporte q bornes de phase.

La source d'alimentation en courants polyphasés peut être réalisée à l'aide d'une machine électromécanique tournante ou être dérivée d'une association d'une source de courant ou de tension et/ou de transformateurs et/ou de circuits électroniques de conversion de puissance.

La source d'alimentation en courants est réalisée de préférence par l'association d'une batterie et d'un onduleur polyphasé à q phases de sortie.

Deux bobinages voisins ayant une même phase de courant sont espacés angulairement d'un angle égal à 360/p degrés.

A un même instant t de fonctionnement de la pompe magnétohydrodynamique, q familles de champs magnétiques, alternatifs et déphasés d'un angle temporel de 360/q degrés, résultant en un champ magnétique p-polaire tournant à une vitesse de pulsation égale à pulsation temporelle w des courants délivrés par l'alimentation divisée par le nombre p de paires de pôles.

Le nombre de phases q de courants est un entier quelconque supérieur ou égal à 2.

Le nombre p de paires de pôles est un entier quelconque.

Le nombre d'encoches par phase et par pole est un entier quelconque.

Dans une variante de construction du stator, la distribution des enroulements conducteurs est mise en oeuvre sur le premier élément de conduction magnétique au lieu du deuxième élément de conduction. Cette variante est intéressante sous réserve que la taille de la place disponible dans le trou central de la roue inertielle reste suffisante.

D'une manière générale, englobant les première, deuxième, et troisième formes de réalisation, une roue d'inertie magnétohydrodynamique, destinée à corriger en tant qu'actionneur une variation d'un angle d'attitude d'une plateforme, comprend un anneau fluidique, et au moins une pompe magnétohydrodynamique.

L'anneau fluidique, de forme torique, comporte un trou d'anneau central traversé par un axe central, ayant une taille interne égale au diamètre du trou d'anneau.

L'anneau fluidique est rempli d'un liquide conducteur dense et a au moins une zone d'entrefer, apte à être traversée par un ou des champs magnétiques et a au moins une zone effective de mise en mouvement du liquide.

Chaque pompe magnétohydrodynamique comporte un unique et différent entrefer magnétique, l'entrefer magnétique encadrant une unique et différente zone d'entrefer et des zones effectives de mise en mouvement incluses dans la zone d'entrefer.

Chaque pompe magnétohydrodynamique comporte un moyen unique et différent de création du ou des champ magnétiques de traversée de l'entrefer magnétique associé, et comporte au moins un élément de conduction magnétique unique et différent, configuré pour conduire et canaliser le ou les champs magnétiques créés dans la ou les zones effectives de mise en mouvement, chaque élément de conduction magnétique étant séparé au plus près de l'axe central du trou de l'anneau d'une distance d'éloignement du circuit magnétique qui lui est propre.

Le rapport de la distance d'éloignement d'un élément de conduction magnétique quelconque d'une pompe magnétohydrodynamique quelconque sur la moitié de la taille interne de l'anneau fluidique est supérieur ou égal à 0,5, de préférence supérieur ou égal 0,7.

Le liquide conducteur est un liquide pris dans l'ensemble formé par le gallium liquide, le mercure liquide et le NaK.

De manière générale, les éléments de conduction magnétiques sont réalisés par empilement de tôles magnétiques à grains non orientés ou par moulage d'un matériau magnétique fritté seul ou dans un composite. Les enroulements conducteurs sont des bobines à fils ou à rubans enroulés autour, sur ou dans les éléments de conduction.

De manière générale, une section radiale de l'enveloppe interne de l'anneau fluidique est comprise dans l'ensemble formé par les cercles, les ellipses, les rectangles, les carrés, les rectangles à anges arrondies, les carrés à angles arrondies, les polygones, les polygones à angles arrondis, et les combinaisons de plusieurs de ces formes géométriques.

En variante, l'enveloppe de l'anneau fluidique est déformable et élastique en section radiale. Ainsi, si le liquide conducteur est un métal qui se dilate en passant de l'état liquide à l'état solide, l'enveloppe de l'anneau est apte à supporter l'expansion du métal à l'état solide, et à éviter des bulles lorsque le métal, chauffé par les courants de Foucault de la ou les pompes magnétohydrodynamiques en fonctionnement, redevient liquide. Il est à remarquer que la provision d'au moins deux zones effectives de mise en mouvement du liquide conducteur suffisamment dispersées améliore l'efficacité du chauffage du métal conducteur solide dans l'anneau fluidique.

Par exemple, l'enveloppe de l'anneau fluidique est rendue déformable et élastique par la provision de plis d'extension circonférentielle sur un plusieurs coins du polygone formant le contour de la section radiale de l'anneau fluidique, ces plis agissant de manière analogue à des soufflets.

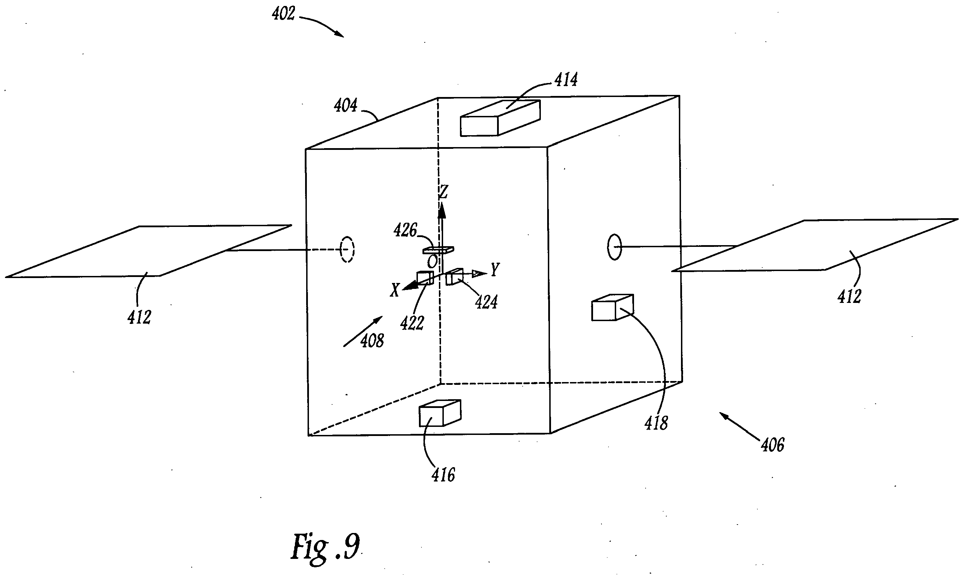

Suivant la Figure 9, un satellite 402 comprend une plateforme 404, un ou plusieurs équipements massifs 406 disposés sur ou amarrés à la plateforme 404 et un sous-Système de Contrôle d'Attitude et d'Orbite 408 (SCAO).

Des équipements amarrés 406 sont par exemple des panneaux solaires 412 et une antenne 414 représentée de manière schématique par une boite.

Des équipements massifs 406 disposés sur la plateforme sont par exemple des boites 416, 418 remplies de composants électroniques.

Le Sous-Système de Contrôle d'Attitude et d'Orbite 408 (SCAO) comprend trois roues magnétohydrodynamiques 422, 424, 426 fixées à la plateforme 404 ayant par exemple une structure telle que décrites ci-dessus, configurées pour stabiliser le satellite 402 en tant qu'actionneurs inertiels de stabilisation du satellite 402.

Suivant la Figure 9, les axes d'inertie X, Y, Z des roues magnétohydrodynamiques 422, 424, 426, c'est à dire les axes centraux traversant les anneaux fluidiques associés, sont orthogonaux deux à deux, de sorte que l'ensemble forme un système de stabilisation triaxiale.

La taille de chacune des roues magnétohydrodynamiques embarquées à bord du satellite est comprise entre 10 centimètres et 10 mètres.

En variante, le satellite 402 comprend au moins une roue magnétohydrodynamique selon l'invention.

En variante, au moins une roue magnétohydrodynamique 422, 424, 426 a un trou central dans lequel sont disposées une partie ou la totalité des équipements massifs.

Une roue magnétohydrodynamique d'actionnement inertiel ou un actionneur inertiel tel que décrit ci-dessus est configuré pour réaliser, soit une roue cinétique, soit une roue de réaction, soit un actionneur gyroscopique.

La roue cinétique outre son aptitude à fournir un couple de réaction (généralement faible), permet par une grande vitesse de rotation du liquide conducteur d'embarquer un moment cinétique important, et de conserver une direction fixe en repère inertiel en l'absence de couples perturbateurs. En d'autres termes, la roue cinétique confère une raideur gyroscopique à la plateforme.

La roue de réaction fournit essentiellement un couple de réaction par la modification de la vitesse de rotation du fluide conducteur. Dans ce cas, on cherche à minimiser le moment cinétique afin d'éviter les couples transverses induits par effet gyroscopique.

L'actionneur gyroscopique ou gyrocoupleur (dénommé en anglais Control Moment Gyro) permet de produire un couple gyroscopique élevé non pas en accélérant ou décélérant la roue mais en la basculant. On crée ainsi une variation de moment cinétique qui se traduit par un couple perpendiculaire au moment cinétique de la roue et au vecteur vitesse de rotation qui lui est appliqué.

Des roues magnétohydrodynamiques selon l'invention peuvent être utilisées par exemple comme élément de stabilisation d'une caméra lorsque la taille de la roue est comprise entre 1 cm et 10 cm.

Des roues magnétohydrodynamiques peuvent être utilisées comme éléments de stabilisation précise ou de pointage précis d'un satellite de taille quelconque allant de celle d'un nanosatellite à celle d'un gros satellite géostationnaire, comme élément de stabilisation précise d'une sonde spatiale, ou d'un engin aérospatial tel qu'une nacelle suspendue à un ballon. Dans ce cas, la taille de la roue est comprise entre 10 cm et 10 mètres.

Des roues magnétohydrodynamiques peuvent être utilisées comme élément de stabilisation précise d'une station spatiale ou d'un véhicule spatial de grande taille, la taille des roues étant comprise entre 10 mètres et quelques centaines de mètres.

De manière générale, une plateforme stabilisée en attitude comprend une structure de support, un ou plusieurs équipements massifs disposés sur la structure de support, et au moins une roue d'inertie magnétohydrodynamique définie ci-dessus.

La taille de l'une quelconque des roues magnétohydrodynamiques est comprise entre quelques centimètres et quelques centaines de mètres.

## Revendications

1. Actionneur inertiel de stabilisation et/ou de pointage d'une plateforme selon une direction prédéterminée comprenant :
un anneau fluidique (3 ;306), de forme torique, comportant un trou d'anneau central (16 ; 332) traversé par un axe central (18 ; 322), ayant une taille interne égale au diamètre du trou d'anneau (16 ; 332), rempli d'un liquide conducteur et ayant au moins deux zones d'entrefer (34, 36, 38 ; 366), chaque zone d'entrefer étant apte à être traversée par un ou des champs magnétiques et incluant une zone effective (24, 26, 28) de mise en mouvement du liquide, et
au moins deux pompes magnétohydrodynamiques (4, 6, 8 ; 308) de mise en mouvement du liquide conducteur autour de l'axe central (18 ; 322) de l'anneau fluidique (3 ; 306),
chaque pompe magnétohydrodynamique (4, 6, 8 ; 308) ayant un unique et différent entrefer (84, 86, 88 ; 360), qui est associé à une unique et différente zone d'entrefer (34, 36, 38; 366),
chaque pompe magnétohydrodynamique (4, 6, 8 ; 308) comportant un moyen (54, 56, 58 ; 355) unique et différent de création du ou des champ magnétiques traversant l'entrefer associé (54, 56, 58 ; 360), et comportant au moins un élément de conduction magnétique unique et différent (64, 66, 68 ; 354, 356), configuré pour conduire et canaliser le ou les champs magnétiques créés dans la ou les zones effectives de mise en mouvement (24, 26, 28), chaque élément de conduction magnétique (64, 66, 68 ; 354, 356) étant séparé au plus près de l'axe central (18 ; 322) du trou de l'anneau (16 ; 332) d'une distance d'éloignement du circuit magnétique qui lui est propre,
**caractérisé en ce que** le rapport de la distance d'éloignement (d1, d2, d3) d'un élément de conduction magnétique (64, 66, 68 ; 354, 356) d'une pompe magnétohydrodynamique sur la moitié de la taille interne (Ti) de l'anneau fluidique (3 ; 306) est supérieur ou égal à 0,5, de préférence supérieur ou égal 0,7, et **en ce que** l'anneau fluidique (3 ; 306) comprend au moins deux zones effectives distinctes (24, 26) de mise en mouvement du liquide conducteur, centrées chacune autour d'un demi-plan médian radial respectif, et espacées angulairement autour de l'axe central suivant un pas d'espacement sensiblement égal à 360 degrés divisés par le nombre P de zones effectives..

2. Actionneur inertiel selon la revendication 1, **caractérisé en ce que** la ou les pompes magnétohydrodynamiques (4, 6, 8 ; 308) sont des pompes prises dans l'ensemble formé par les pompes électromagnétiques à conduction à courant continu, les pompes électromagnétiques à conduction à courant alternatif, les pompes électromagnétiques à induction linéaire, les pompes électromagnétiques à induction annulaire, et les pompes électromagnétiques à induction spirale.

3. Actionneur inertiel selon l'une quelconque des revendications 1 à 2, comprenant
au moins deux pompes magnétohydrodynamiques distinctes (4, 6, 8), chaque pompe magnétohydrodynamique (4, 6, 8) étant associée à une zone d'entrefer unique et différente (34, 36, 38); et
un circuit de synchronisation (12) connecté à l'ensemble des pompes magnétohydrodynamiques (4, 6, 8) configuré pour synchroniser entre elles les intensités des champs magnétiques et/ou les intensités des champs électriques créés respectivement par les pompes magnétohydrodynamiques (4, 6, 8) en rendant minimale l'énergie consommée par l'ensemble des pompes magnétohydrodynamiques (4, 6, 8) lorsque le liquide conducteur tourne à une vitesse de rotation de consigne prédéterminée.

4. Actionneur inertiel selon l'une quelconque des revendications 1 à 2, comportant une unique pompe magnétohydrodynamique à induction annulaire (308), dans laquelle le moyen de création d'au moins un champ magnétique (355) est un stator de machine électromécanique ayant plusieurs enroulements (370) disposés autour de l'axe de central (322) et le long d'une circonférence externe de l'anneau (306) configurés pour être raccordés à une source de courants polyphasés (310) et pour créer des champs magnétiques uni ou multipolaires radiaux alternatifs, formant un champ magnétique résultant tournant multipolaire ayant un nombre P de pôles, réparties angulairement de manière régulière, chaque pôle correspondant à une pompe magnétohydrodynamique desdites au moins deux pompes magnétohydrodynamiques, et
l'anneau fluidique (306) comprend le nombre P de zones effectives de mise en mouvement du liquide conducteur, centrées chacune autour d'un demi-plan médian radial respectif, et espacées angulairement deux à deux pour deux zones les plus proches voisines d'un pas, sensiblement égal à 360 degrés divisés par le nombre P de zones effectives, l'axe médian radial d'une zone coïncidant avec l'axe d'un pôle du champ magnétique résultant au même instant.

5. Actionneur inertiel selon la revendication 4, comprenant en outre une unité de régulation (312) de la fréquence des amplitudes des courants fournis par la source de courants pour rendre minimale l'énergie consommée par la pompe magnétohydrodynamique à induction annulaire (308) lorsque le liquide conducteur tourne à une vitesse de rotation de consigne prédéterminée.

6. Actionneur inertiel selon l'une quelconque des revendications 1 à 5, dans lequel le liquide conducteur est un liquide pris dans l'ensemble formé par le gallium liquide, le mercure liquide et la NaK.

7. Actionneur inertiel selon l'une quelconque des revendications 1 à 6, dans lequel une section radiale de l'enveloppe interne de l'anneau fluidique (3 ; 306) est comprise dans l'ensemble formé par les cercles, les ellipses, les rectangles, les carrés, les rectangles à anges arrondies, les carrés à angles arrondies, les polygones, les polygones à angles arrondis et les combinaisons de plusieurs de ces formes géométriques.

8. Actionneur inertiel selon l'une quelconque des revendications 1 à 7, dans lequel chaque pompe magnétohydrodynamique (4, 6, 8) comprend un unique élément de conduction magnétique ayant une première extrémité polaire et une deuxième extrémité polaire disposées de part et d'autre de l'entrefer pour former avec l'entrefer un circuit magnétique refermé sur lui-même.

9. Actionneur inertiel selon l'une quelconque des revendications 1 à 7, dans lequel chaque pompe magnétohydrodynamique (308) comprend un premier élément magnétique de conduction magnétique (352) et un deuxième élément de conduction magnétique (354) disposés de part et d'autre de l'entrefer pour former en série avec l'entrefer et le moyen de création de champ magnétique un circuit magnétique refermé sur lui-même.

10. Plateforme comprenant une structure de support (404), un ou plusieurs équipements massifs (406) disposés sur la structure de support (404), et au moins un actionneur inertiel (422, 424, 426) défini selon l'une quelconque des revendications 1 à 9, et dans laquelle la taille de l'un quelconque des actionneurs inertiels (422, 424), 426) est comprise entre 20 centimètres et quelques centaines de mètres.

11. Plateforme selon la revendication 10, dans laquelle l'actionneur inertiel est, soit une roue cinétique pour conférer une raideur gyroscopique à la plateforme, soit une roue de réaction pour modifier le moment angulaire ou le moment cinétique de la plateforme autour d'une valeur minimale, soit un actionneur gyroscopique pour modifier fortement le moment angulaire de la plateforme par basculement de sa roue.

## Patentansprüche

1. Trägheitsstellglied zur Stabilisation und/oder Nachführung einer Plattform entlang einer vorbestimmten Richtung, Folgendes umfassend:
einen Fluidring (3; 306) mit torischer Form, der eine von einer Mittelachse (18 ; 322) durchquerte zentrale Ringöffnung (16; 332) mit einer dem Durchmesser der Ringöffnung (16 ; 332) gleichkommenden Innengröße umfasst, der mit einer leitenden Flüssigkeit gefüllt ist und mindestens zwei Luftspaltbereiche (34, 36, 38; 366) hat, wobei jeder Luftspaltbereich von einem Magnetfeld oder von Magnetfeldern durchquert werden kann und einen Wirkungsbereich (24, 26, 28), um die Flüssigkeit in Bewegung zu versetzen, enthält, und
mindestens zwei magnetohydrodynamische Pumpen (4, 6, 8; 308), um die leitende Flüssigkeit um die Mittelachse (18; 322) des Fluidrings (3; 306) in Bewegung zu versetzen,
wobei jede magnetohydrodynamische Pumpe (4, 6, 8; 308) einen einzigen und spezifischen Luftspalt (84, 86, 88; 360) hat, der einem einzigen und spezifischen Luftspaltbereich (34, 36, 38; 366) zugeordnet ist,
wobei jede magnetohydrodynamische Pumpe (4, 6, 8; 308) eine einzige und spezifische Einrichtung (54, 56, 58 ; 355) zur Erzeugung des Magnetfelds oder der Magnetfelder umfasst, das bzw. die den zugeordneten Luftspalt (54, 56, 58 ; 355) durchquert bzw. durchqueren, und mindestens ein einziges und spezifisches magnetisches Leitungselement (64, 66, 68; 354, 356) umfasst, das dazu ausgelegt ist, das Magnetfeld oder die Magnetfelder zu leiten oder zu kanalisieren, das bzw. die in dem Wirkungsbereich oder den Wirkungsbereichen (24, 26, 28), um in Bewegung zu versetzen, erzeugt wird bzw. werden, wobei jedes magnetische Leitungselement (64, 66, 68; 354, 356) möglichst von der Mittelachse (18; 322) der Ringöffnung (16; 332) um einen Entfernungsabstand des ihm eigenen Magnetkreises getrennt ist,
**dadurch gekennzeichnet, dass** das Verhältnis des Entfernungsabstands (d1, d2, d3) eines magnetischen Leitungselements (64, 66, 68; 354, 356) einer magnetohydrodynamischen Pumpe an der Hälfte der Innengröße (Ti) des Fluidrings (3; 306) größer oder gleich 0,5, vorzugsweise größer oder gleich 0,7 ist, und dass der Fluidring (3; 306) mindestens zwei unterschiedliche Wirkungsbereiche (24, 26) umfasst, um die leitende Flüssigkeit in Bewegung zu versetzen, die jeweils um eine jeweilige radiale mittlere Halbebene zentriert und um die Mittelachse gemäß einer Beabstandungsteilung von im Wesentlichen gleich 360 Grad geteilt durch die Anzahl P an Wirkungsbereichen winkelbeabstandet sind.

2. Trägheitsstellglied nach Anspruch 1, **dadurch gekennzeichnet, dass** die magnetohydrodynamische Pumpe/n (4, 6, 8; 308) Pumpen sind, die aus der Gruppe entnommen sind, die aus Gleichstrom leitenden elektromagnetischen Pumpen, Wechselstrom leitenden elektromagnetischen Pumpen, elektromagnetischen Pumpen mit linearer Induktion, elektromagnetischen Pumpen mit ringförmiger Induktion und elektromagnetischen Pumpen mit spiralförmiger Induktion besteht.

3. Trägheitsstellglied nach einem der Ansprüche 1 bis 2, Folgendes umfassend:
mindestens zwei unterschiedliche magnetohydrodynamische Pumpen (4, 6, 8), wobei jede magnetohydrodynamische Pumpe (4, 6, 8) einem einzigen und spezifischen Luftspaltbereich (34, 36, 38) zugeordnet ist; und
eine an die Einheit der magnetohydrodynamische Pumpen (4, 6, 8) angeschlossene Synchronisationsschaltung (12), die dazu ausgelegt ist, die Stärken der Magnetfelder und/oder die Stärken der jeweils durch die magnetohydrodynamischen Pumpen (4, 6, 8) erzeugten elektrischen Felder miteinander zu synchronisieren, indem die von der Einheit der magnetohydrodynamischen Pumpen (4, 6, 8) verbrauchte Energie minimal ausgelegt wird, wenn sich die leitende Flüssigkeit mit einer vorbestimmten Solldrehgeschwindigkeit dreht.

4. Trägheitsstellglied nach einem der Ansprüche 1 bis 2, eine einzige magnetohydrodynamische Pumpe (308) mit ringförmiger Induktion umfassend, wobei die Einrichtung (355) zur Erzeugung mindestens eines Magnetfelds (355) ein elektromechanischer Maschinenstator mit mehreren um die Mittelachse (322) und entlang eines Außenumfangs des Rings (306) angeordneten Wicklungen (370) ist, die dazu ausgelegt sind, an eine Quelle (310) mehrphasiger Ströme angeschlossen zu werden und ein- oder mehrpolige radiale Wechselmagnetfelder zu erzeugen, die ein sich ergebendes, mehrpoliges, drehendes Magnetfeld mit einer Anzahl P an Polen bilden, die gleichmäßig winkelverteilt sind, wobei jeder Pol einer magnetohydrodynamischen Pumpe der mindestens zwei magnetohydrodynamischen Pumpen entspricht, und
der Fluidring (306) die Anzahl P der Wirkungsbereiche, um die leitende Flüssigkeit in Bewegung zu versetzen, umfasst, die jeweils um eine jeweilige radiale mittlere Halbebene zentriert und paarweise zu zwei um eine Teilung am nächsten benachbarte Bereiche um die Mittelachse von im Wesentlichen gleich 360 Grad geteilt durch die Anzahl P an Wirkungsbereichen winkelbeabstandet sind, wobei die radiale mittlere Achse eines Bereichs mit der Achse eines Pols des sich im selben Moment ergebenden Magnetfelds übereinstimmt.

5. Trägheitsstellglied nach Anspruch 4, darüber hinaus eine Regeleinheit (312) für die Frequenz der Amplituden der durch die Stromquelle gelieferten Ströme umfasst, um die der magnetohydrodynamischen Pumpe (308) mit ringförmiger Induktion verbrauchte Energie minimal auszulegen, wenn sich die leitende Flüssigkeit mit einer vorbestimmten Solldrehgeschwindigkeit dreht.

6. Trägheitsstellglied nach einem der Ansprüche 1 bis 5, wobei die leitende Flüssigkeit eine Flüssigkeit ist, die aus der Gruppe entnommen ist, die aus flüssigem Gallium, flüssigem Quecksilber und NaK besteht.

7. Trägheitsstellglied nach einem der Ansprüche 1 bis 6, wobei ein radialer Querschnitt der Innenhülle des Fluidrings (3; 306) in der Gruppe enthalten ist, die aus Kreisen, Ellipsen, Rechtecken, Quadraten, Rechtecken mit abgerundeten Ecken, Quadraten mit abgerundeten Ecken, Polygonen, Polygonen mit abgerundeten Ecken und Kombinationen aus mehreren dieser geometrischen Formen besteht.

8. Trägheitsstellglied nach einem der Ansprüche 1 bis 7, wobei jede magnetohydrodynamische Pumpe (4, 6, 8) ein einziges magnetisches Leitungselement mit einem ersten Polende und einem zweiten Polende umfasst, die jeweils beidseits des Luftspalts angeordnet sind, um mit dem Luftspalt einen in sich geschlossenen Magnetkreis zu bilden.

9. Trägheitsstellglied nach einem der Ansprüche 1 bis 7, wobei jede magnetohydrodynamische Pumpe (308) ein erstes magnetisches Leitungselement (352) und ein zweites magnetisches Leitungselement (354) umfasst, die beidseits des Luftspalts angeordnet sind, um in Reihe mit dem Luftspalt und der Einrichtung zum Erzeugen eines Magnetfelds einen in sich geschlossenen Magnetkreis zu bilden.

10. Plattform mit einer Stützstruktur (404), einem oder mehreren massiven Betriebsmittel/n (406), das bzw. die auf der Stützstruktur (404) angeordnet ist bzw. sind, und mindestens einem nach einem der Ansprüche 1 bis 9 definierten Trägheitsstellglied (422, 424, 426), und wobei die Größe eines beliebigen der Trägheitsstellglieder (422, 424, 426) zwischen 20 Zentimeter und einigen hundert Meter beträgt.

11. Plattform nach Anspruch 10, wobei das Trägheitsstellglied entweder ein kinetisches Rad, um der Plattform eine Kreiselsteifigkeit zu verleihen, oder ein Reaktionsrad, um den Drehimpuls oder das kinetische Moment der Plattform um einen Mindestwert herum zu verändern, oder ein gyroskopisches Stellglied ist, um den Drehimpuls der Plattform durch Kippen ihres Rads stark zu verändern.

## Claims

1. An inertial actuator for stabilising and/or aiming a platform along a predetermined direction comprising:
a fluid ring (3; 306), of a torus shape, including a central ring hole (16; 332) crossed by a central axis (18; 322), having an internal size equal to the diameter of the ring hole (16; 332), filled with a conductive liquid and having at least one air gap area (34, 36, 38; 366), capable of being crossed by magnetic field(s) and having at least one effective area (24, 26, 28) for setting the liquid into motion, and
at least one magnetohydrodynamic pump (4, 6, 8; 308) for setting the conductive liquid into motion around the central axis (18; 322) of the fluid ring (3; 306),
each magnetohydrodynamic pump (4, 6, 8; 308) having a single and different air gap (84, 86, 88; 360), the air gap (84, 86, 88; 360) being associated with a single and different air gap area (34, 36, 38; 366) and with effective areas for setting into motion (24, 26, 28) included in the air gap area (34, 36, 38; 366),
each magnetohydrodynamic pump (4, 6, 8; 308) including a single and different means (54, 56, 58; 355) for generating magnetic field(s) crossing the associated air gap (54, 56, 58; 360), and including at least one single and different magnetic conduction element (64, 66, 68; 354, 356), configured for conducting and channelling the magnetic field(s) generated in the effective area(s) for setting into motion (24, 26, 28), each magnetic conduction element (64, 66, 68; 354, 356) being separated as close as possible to the central axis (18; 322) of the whole of the ring (16; 332) by a set back distance of the magnetic circuit which is specific to it,
**characterised in that**
the ratio of the set back distance (d1, d2, d3) of any magnetic conduction element (64, 66, 68; 354, 356) of any magnetohydrodynamic pump over half of the internal size (Ti) of the fluid ring (3; 306) is greater than or equal to 0.5, preferably greater than or equal to 0.7, and
**in that** the fluidic ring (3; 306) comprises at least two distinct effective areas (24, 26), for setting the conductive liquid into motion, each centered around one of a respective radial middle half-plane and spaced apart angularly around the central axis according to a spacing pitch that is substantially equal to 360 divided by the number P of effective areas.

2. The inertial actuator according to claim 1, **characterised in that** the magnetohydrodynamic pump(s) (4, 6, 8; 308) is (are) pumps taken from the set formed by DC current conduction electromagnetic pumps, AC current conduction electromagnetic pumps, linear induction electromagnetic pumps, annular induction electromagnetic pumps, and spiral induction electromagnetic pumps.

3. The inertial actuator according to any of claims 1 to 2, comprising
at least two distinct magnetohydrodynamic pumps (4, 6, 8), each magnetohydrodynamic pump (4, 6, 8) being associated with a single and different air gap area (34, 36, 38); and
a synchronization circuit (12) connected to the whole of the magnetohydrodynamic pumps (4, 6, 8) configured for synchronising with each other the intensities of the magnetic fields and/or the intensities of the electric fields respectively generated by the magnetohydrodynamic pumps (4, 6, 8) by minimising the energy consumed by the whole of the magnetohydrodynamic pumps (4, 6, 8) when the conductive liquid rotates at a predetermined set rotational speed.

4. The inertial actuator according to any of claims 1 to 2, comprising a single magnetohydrodynamic pump with annular induction (308), in which the means for generating at least one magnetic field (355) is an electromechanical machine stator having several windings (370) positioned around the central axis (322) and along an external circumference of the ring (306) configured so as to be connected to a multi-phase current source (310) and for generating alternating radial unipolar or multipolar magnetic fields, forming a resulting multipolar rotating magnetic field having a number P of poles, regularly distributed angularly, each pole corresponding to one magnetohydrodynamic pump of the ate two magnetohydrodynamic pumps, and
the fluid ring (306) comprising the number P of effective areas for setting into motion the conductive liquid, each centered around a respective radial middle half-plane, and angularly spaced apart 2 x 2 for two closest neighbouring areas by a pitch, substantially equal to 360° divided by the number P of effective areas, the radial middle area coinciding with the axis of a pole of the resulting magnetic field at the same instant.

5. The inertial actuator according to claim 4, further comprising a unit for regulating (312) the frequency of the amplitudes of the currents provided by the current source in order to minimise the energy consumed by the magnetohydrodynamic pump (308) when the conductive liquid rotates at a predetermined set rotational speed.

6. The inertial actuator according to any of claims 1 to 5, wherein the conductive liquid is a liquid taken from the set formed by liquid gallium, liquid mercury and NaK.

7. The inertial actuator according to any claims 1 to 6, wherein a radial section of the internal envelope of the fluid ring (3; 306) is comprised in the set formed by circles, ellipses, rectangles, squares, rectangles with rounded angles, squares with rounded angles, polygons, polygons with rounded angles and the combinations of several of these geometrical shapes.

8. The inertial actuator according to any of claims 1 to 7, wherein each magnetohydrodynamic pump (4, 6, 8) comprises a single magnetic conduction element having a first polar end and a second polar end positioned on either side of the air gap in order to form with the air gap a magnetic circuit closed on itself.

9. The inertial actuator according to any claims 1 to 7, wherein each magnetohydrodynamic pump (308) comprises a first magnetic conduction magnetic element (352) and a second magnetic conduction element (354) positioned on either side of the air gap in order to form a series with the air gap and the means for generating a magnetic field, a magnetic circuit closed on itself.

10. A platform comprising a supporting structure (404), one or several massive pieces of equipment (406) positioned on the supporting structure (404), and at least one inertial actuator (422, 424, 426) defined according to any of claims 1 to 10, and wherein the size of any of the inertial actuators (422, 424, 426) is comprised between 20 centimetres and a few hundred metres.

11. The platform according to claim 10, wherein the inertial actuator is either a kinetic wheel for giving gyroscopic stiffness to the platform, or a reaction wheel for changing the angular momentum or the kinetic energy of the platform around a minimum value, or a gyroscopic actuator for strongly changing the angular momentum of the platform by tilting its wheel.
